(19) Europäisches Patentamt
European Patent Office
Office européen des brevets

(11) EP 0 918 735 B1

(12) **EUROPÄISCHE PATENTSCHRIFT**

(45) Veröffentlichungstag und Bekanntmachung des Hinweises auf die Patenterteilung:
**07.08.2002 Patentblatt 2002/32**

(21) Anmeldenummer: **98933499.0**

(22) Anmeldetag: **12.05.1998**

(51) Int Cl.[7]: **C04B 35/593**, C04B 35/58

(86) Internationale Anmeldenummer:
**PCT/DE98/01305**

(87) Internationale Veröffentlichungsnummer:
**WO 98/54110 (03.12.1998 Gazette 1998/48)**

(54) **VERFAHREN ZUR HERSTELLUNG VON FORMKÖRPERN AUS EINEM KERAMISCHEN VERBUNDGEFÜGE**

METHOD FOR PRODUCING MOULDED BODIES FROM A COMPOSITE CERAMIC MATERIAL STRUCTURE

PROCEDE DE FABRICATION DE CORPS MOULES AVEC UN MATERIAU CERAMIQUE COMPOSITE

(84) Benannte Vertragsstaaten:
**CH DE ES FR GB IT LI NL SE**

(30) Priorität: **28.05.1997 DE 19722321**

(43) Veröffentlichungstag der Anmeldung:
**02.06.1999 Patentblatt 1999/22**

(73) Patentinhaber: **ROBERT BOSCH GMBH**
**70442 Stuttgart (DE)**

(72) Erfinder:
- **KNOLL, Günter**
**D-70195 Stuttgart (DE)**
- **LINDEMANN, Gert**
**D-72805 Lichtenstein (DE)**
- **LINDNER, Friederike**
**D-70839 Gerlingen (DE)**

(56) Entgegenhaltungen:
**EP-A- 0 721 925**
**US-A- 4 486 651**
**US-A- 4 613 455**
**US-A- 4 923 829**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

**Beschreibung**

Stand der Technik

Die Erfindung betrifft ein Verfahren zur Herstellung von Formkörpern aus einem keramischen Verbundgefüge, insbesondere aus einem Trisiliziumtetranitrid-Metallsilizid-Verbundgefüge nach der Gattung des unabhängigen Anspruches.

Keramische Werkstoffe sind in ihrem Potential bezüglich höherer Einsatztemperaturen vergleichbaren Werkstoffen, beispielsweise metallischen Legierungen deutlich überlegen. Besonders geeignet für verschiedene Anwendungen, insbesondere bei hohen Temperaturen sind dabei Trisiliziumtetranitridwerkstoffe, die sich durch hervorragende mechanische als auch - in entsprechenden Verbundgefügen in Kombination mit elektrisch leitenden Verbindungen - elektrische Eigenschaften auszeichnen. Nichtoxidische keramische Werkstoffe auf der Basis von Silizium sind thermomechanisch hochbelastbar, und auch in hohen Temperaturbereichen bis beispielsweise 1300° C weitgehend oxidations- und korrosionsbeständig. Ein weiterer wichtiger Aspekt nichtoxidischer keramischer Werkstoffe liegt in der gezielten Einstellung ihrer elektrischen Eigenschaften insbesondere in Werkstoffkombinationen und Verbundgefügen.

In der DE 37 34 274 C2 sind keramische Werkstoffe auf der Basis von Siliziumnitrid, Aluminiumnitrid und β-Sialon in Verbindung mit Sekundärphasen aus verschiedenen Siliziden, Carbiden, Boriden und Nitriden von Übergangsmetallelementen beschrieben. Je nach Sekundärphasengehalt besitzen diese Materialien gezielt einstellbare elektrische Eigenschaften. Die einstellbaren spezifischen Werte für den elektrischen Widerstand dieser Materialien liegen bei Raumtemperatur zwischen $1*10^{13}$ bis $1*10^{-4}$ Ωcm und zeigen eine positive Abhängigkeit von der Temperatur (PTC-Effekt). Das Festigkeitsniveau dieser so erzeugten Verbundwerkstoffe liegt nicht unter 200 MPa. Das dort verwendete Verfahren zur Herstellung von hochwarmfesten Verbundwerkstoffen wird als einaxiales Heißpressen bezeichnet, welches insbesondere Nachteile hinsichtlich der Formgebung von aus diesen Verbundwerkstoffen hergestellten Körpern aufweist, anisotrope Materialeigenschaften aufgrund der Preßrichtung besitzen kann und nur als Chargierverfahren, d.h. nicht als kontinuierliches Verfahren, anwendbar ist. Darüberhinaus erfordert dieses Verfahren hohe Temperaturen und Drücke.

Weiterhin ist bekannt, hochwarmfeste elektrisch isolierende Verbundwerkstoffe auf der Basis Trisiliziumtetranitrid mit Metallsiliziden der Formel $MSi_2$ und $M_5Si_3$, wobei M ein Übergangsmetall bzw. ein Hauptgruppenmetall ist durch Gasdrucksintern bei einem Druck von 100 bar $N_2$ herzustellen (DE 195 00 832 A1, und EP 0 721 925 A2). Gasdrucksintern ist unter anderem durch die hohen benötigten Drücke von bis zu 400 MPa teuer und aufwendig. Heißpressen erfordert ebenfalls axiale Drücke bis zu 30 Mpa, ist teuer und nur für einfache Bauteile anwendbar.

US-A-4 923 829 beschreibt zwar ein Verfahren zur Herstellung eines gesinterten Formkörpers aus kompositmaterial einstellbarer elektrischer Leitfähigkeit, bei dem ein zweistufiger Sinterprozess eingesetzt wird, aus diesem ist jedoch weder bekannt, die letzte Sinterung unter einem Stickstoffpartialdruck von 2 bis 10 bar durchzuführen, noch die Temperatur der ersten Sinterstufe geringer als die Temperatur der letzten Sinterstufe zu wählen. Zudem wird darin die erste Sinterung nicht unter Inertgas im Sinne der beanspruchten Erfindung durchgeführt, da das Ausgangspulver metallisches Silizium enthält, das mit dem bei der Sinterung zugeführten Stickstoff zu Siliziumnitrid reagiert. Insofern ist der beim Sintern gemäß US-A-4 923 829 zuge-führte Stickstoff kein Inertgas sondern ein Reaktivgas.

Vorteile der Erfindung

Das erfindungsgemäße Verfahren hat gegenüber den bislang beschriebenen Verfahren den Vorteil, daß größere Gestaltungsfreiräume für thermomechanisch stark beanspruchte Formkörper möglich sind in Kombination mit der gezielten Variation ihrer elektrischen Eigenschaften. Darüberhinaus können komplizierte geometrische Strukturen durch eine wesentlich günstigere Bearbeitung im grünen Zustand realisiert werden. Dies wird erreicht, indem zuerst in einem mehrstufigen Preßprozeß der Formkörper isostatisch kalt gepreßt und anschließend in die gewünschte Form gebracht wird. Eine aufwendige Hartbearbeitung beispielsweise nach dem Heißsintern, wie es bei einaxialen Preßverfahren erforderlich ist, entfällt dadurch.

Weitere vorteilhafte Ausgestaltungen und Weiterbildungen des erfindungsgemäßen Verfahrens sind in den Unteransprüchen ausgeführt.

In bevorzugter Ausführung wird nach dem kaltisostatischen Formpreßschritt eine erste Sinterung bei Atmosphärendruck unter einem Inertgas durchgeführt. Damit wird die vorgenommene Formgebung weiter verfestigt.

Die letzte Sinterung wird unter einem Stickstoff partialdruck von 2 bis 10 bar durchgeführt. Die Sintertemperatur dieser Sinterung beträgt dabei vorzugsweise zwischen 1700° und 1900° C. Aus einem Zustandsdiagramm der eingesetzten Bestandteile A und B kann unter diesen Bedingungen entnommen werden, daß nur die reinen Phasen A und B vorliegen und mögliche Mischphasen nicht vorkommen. Damit wird insbesondere vermieden, daß beispielsweise nichtleitende Phasen oder Phasenübergänge oder schlecht leitende Phasen die gewünschten elektrischen Eigenschaften, des gesinterten Endproduktes vermindern oder entscheidend beeinträchtigen.

In einer weiteren besonders vorteilhaften Ausführung erfolgt die Sinterung in einem Bereich des Schutzgaspartialdruckes log $p(N_2)$, der durch eine obe-

re Grenze $Y_1$ und eine untere Grenze $Y_2$ definiert ist. Dabei stehen die Stickstoffpartialdrücke $Y_1$ und $Y_2$ und die Sintertemperatur T zueinander in folgender Beziehung:

$$Y_1 = 7{,}1566 \cdot \ln(T)-52{,}719$$

$$Y_2 = 9{,}8279 \cdot \ln(T)-73{,}988$$

Dadurch ist gewährleistet, daß im Phasendiagramm des Systems der gewählten Werkstoffe in diesem Bereich ebenfalls nur die reinen Phasen vorkommen. Durch die variable Beziehung zwischen Temperatur und Druck wird somit ein optimaler Bereich definiert, der es erlaubt, durch Veränderung des Druckes und der Temperatur die optimalen Verfahrensparameter in einem weiteren Bereich beizubehalten, ohne das es dabei beispielsweise zu thermischer Zersetzung, insbesondere einer thermisch weniger stabilen Komponente, beispielsweise eines Nitrides, kommt. Darüberhinaus werden durch diese definierte Beziehung zwischen Druck und Temperatur in einfacher Weise Mischphasen mit unerwünschten Eigenschaftsprofilen vermieden.

In bevorzugter Weise wird in dem keramischen Verbundgefüge als Bestandteil A Trisiliziumtetranitrid und als Bestandteil B ein Metallsilizid verwendet. Als Silizid kommen die meisten gebräuchlichsten Metallsilizide, beispielsweise $MoSi_2$, in Frage. Trisiliziumtetranitrid weist gegenüber seinen Homologen des Bors und Stickstoffs eine größere Härte und bessere Sinterfähigkeit auf.

In vorteilhafter Weise wird als Schutzgas Stickstoff oder eine Mischung aus Stickstoff und einem Edelgas, beispielsweise Argon, verwendet, so daß eine eventuelle Zersetzungsreaktion des eingesetzten Nitrides, insbesondere $Si_3N_4$, nach folgender Gleichgewichtsreaktion weitgehend unterdrückt wird:

$$Si_3N_4 \rightleftarrows 3\,Si + 2\,N_2$$

Das Anwenden des Le Chatelierschen Prinzips durch Erhöhung der Konzentration einer Komponente des Gleichgewichtes erlaubt somit in einfacher Weise, die thermodynamische Stabilität von $Si_3N_4$ zu steigern. Damit sind selbst Sintertemperaturen, die über dem Zersetzungspunkt von $Si_3N_4$ liegen für den Sinterprozess nutzbar. Darüberhinaus wird es damit möglich, den Gehalt von oftmals für die elektrischen Eigenschaften störenden Sinteradditiven in $Si_3N_4$, beispielsweise Aluminiumoxid oder Yttriumoxid, auf einen Wert von unter 10 Gew% zu reduzieren. Ebenso ist vorteilhaft, daß der Gesamtdruck durch das Zumischen eines zweiten Inertgases, z.B. Argon in einfacher Weise eingestellt und kontrolliert werden kann. Dies beeinflußt das Sinterergebnis in Bezug auf die erreichte Werkstoffdichte beider Sintervarianten besonders vorteilhaft, ohne die elektrischen Eigenschaften zu verändern.

Zeichnung

Das erfindungsgemäße Verfahren ist nachfolgend in der Beschreibung und durch die Zeichnungen erläutert. Es zeigen:

Figur 1 die wesentlichen Schritte des erfindungsgemäßen Verfahrens,

Figur 2 ein vereinfachtes Phasendiagramm für die Komponenten A und B in Abhängigkeit von der Temperatur auf der Ordinate und dem Logarithmus des Partialdruckes von Stickstoff auf der Abzisse.

Beschreibung der Ausführungsbeispiele

Figur 1 zeigt die wesentlichen Schritte des erfindungsgemäßen Verfahrens. Dabei wird in Schritt 1 eine Pulvermischung, beispielweise aus den Rohstoffen $Si_3N_4$ und entsprechenden Additiven, z. B. $Al_2O_3$ und $Y_2O_3$ oder anderen bekannten Sinteradditiven, und $MSi_2$, wobei M beispielsweise für Mo, Nb, W, Ti steht, sowie gegebenfalls organischen Preß- oder Bindehilfsmitteln durch Mischen und Mahlen in einer Attritormühle mit einem organischen Lösungsmittel aufbereitet. Schritt 2 umfaßt das Trocknen der sogenannten attritierten Suspension in einem Rotationsverdampfer. Schritt 3 stellt das kaltisostatische Pressen des getrockneten Pulvers zu Formkörpern dar. Schritt 4 umfaßt die Vorsinterung bzw. das Entfernen des Binders unter einer Inertgasatmosphäre mit einem Druck von ungefähr 1 bar bei einer Temperatur bis zu 900° C. Schritt 5 umfaßt die sogenannte Hauptsinterung unter einem definierten Schutzgaspartialdruck, beispielsweise Stickstoff, wobei der $N_2$ Partialdruck im Sintergas nicht mehr als 10 bar beträgt und gleichzeitig die Sintertemperatur die nicht größer als 1900 °C ist. Statt $N_2$ kann auch ein Stickstoff/ Edelgas Gemisch verwendet werden. Schritt 5', der eine Alternative zu Schritt 5 ist, umfaßt das Hauptsintern mit variablem Druck und variabler Temperatur. Der $N_2$-Partialdruck wird mit der Temperatur so variiert, daß der Partialdruck innerhalb eines Bereiches liegt, der durch folgende Abhängigkeiten begrenzt wird:

Die obere Grenze gehorcht der folgenden Beziehung:

$$Y_1 = \log p(N_2) = 7{,}1566 \cdot \ln(T)-52{,}719,$$

und die untere Grenze der Beziehung:

$$Y_2 = \log p(N_2) = 9{,}8279 \cdot \ln(T) - 73{,}988.$$

Die Angabe von T erfolgt in °C. Die Angabe von p ($N_2$) erfolgt in bar. Die Sintertemperatur liegt nicht höher als 1900° C.

In Figur 2 ist dieser Bereich, der durch die beiden logarithmischen Abhängigkeiten begrenzt wird, im Rahmen eines Zweiphasendiagrammes dargestellt. Die Kurve zwischen den Punkten D und C entspricht der oberen Grenze $Y_1$ und die Kurve zwischen Punkten A und B entspricht $Y_2$. Unter bzw. oberhalb der beiden Funktionen $Y_1$ und $Y_2$ befinden sich Mischphasen bzw. Zersetzungsphasen zwischen dem eingesetzten Nitrid und dem Silizid bzw. dem Schutzgas.

Im folgenden wird unter der Bezeichnung MA% der Ausdruck "Massenprozent" verstanden.

Nachfolgend ist ein erstes Ausführungsbeispiel mittels des Verfahrensschrittes 5 beschrieben:

Ein Verbundmaterial, bestehend aus 36 MA% $Si_3N_4$ und 60 MA% $MoSi_2$, sowie den Sinteradditiven mit 1,72 MA% $Al_2O_3$ und 2,28 MA% $Y_2O_3$, wobei die mittlere Korngröße des eingesetzten $Si_3N_4$ 0,7 µm und die des $MoSi_2$ 1,8 µm beträgt, wird kaltisostatisch bei 200 Mpa verdichtet. Anschließend erfolgt eine Vorsinterung unter einem Stickstoffatmosphäre bei einem Druck von 1 bar bei einer Temperatur von 900° C. Die nachfolgende Hauptsinterung unter einem definierten Partialdruck von 10 bar und einer Sintertemperatur von 1900° C erbringt ein Material, dessen Dichte 97 % der Werkstoffdichte aufweist. Der spezifische elektrische Widerstand beträgt $1*10^{-3}$ Qcm bei 25° C.

Ein zweites Ausführungsbeispiels mittels des Verfahrensschrittes 5' wird wie folgt hergestellt:

Ein Verbundmaterial, bestehend aus 63 MA% $Si_3N_4$ und 30 MA% $MoSi_2$, sowie den Sinteradditiven mit 3 MA% $Al_2O_3$, und 4 MA% $Y_2O_3$ wobei die mittlere Korngröße des eingesetzten $Si_3N_4$ 0,7 µm und die des $MoSi_2$ 1,8 µm beträgt, wird kaltisostatisch bei 200 Mpa verdichtet. Nach Vorsinterung entsprechend dem Ausführungsbeispiel 1 erfolgt die Hauptsinterung innerhalb des Phasenbereiches bei variablen Druck und Temperatur, der durch die Punkte A, B, C und D in Figur 2 gegeben ist. Die erzielte Dichte des Werkstoffes beträgt 97 % der Werkstoffdichte. Der spezifische elektrische Widerstand beträgt 106 Ωcm bei 25° C.

Ein drittes Ausführungsbeispiel wird analog zu dem ersten hergestellt, wobei jedoch nach Aufbereitung und vorsinterung die Hauptsinterung bei 1800°C erfolgt. Der Stickstoffpartialdruck beträgt 5 bar und der Gesamtsinterdruck 20 bar. Die erreichte Sinterdichte des Werkstoffes beträgt 98%. Der spezifische Widerstand $1*10^{-4}$ Ωcm.

## Patentansprüche

1. Verfahren zur Herstellung eines gesinterten Formkörpers mit einstellbarer elektrischer Leitfähigkeit aus einem keramischen Verbundgefüge, das mindestens zwei Bestandteile A und B unterschiedlicher elektrischer Leitfähigkeit enthält, wobei der Formkörper vor dem Sintern durch einen Kaltisostatischen Formporßschritt erzeugt wird, der Sinterprozeß in mindestens zwei Stufen abläuft, die erste Sinterung unter Inertgas durchgeführt wird, die letzte Sinterung unter einem Stickstoffpartialdruck von 2 bis 10 bar durchgeführt wird, und die Temperatur der ersten Sinterstufe geringer ist als die Temperatur der letzten Sinterstufe.

2. Verfahren nach Anspruch 1, **dadurch gekennzeichnet, daß** die erste Sinterstufe bei Atmosphärendruck durchgeführt wird.

3. Verfahren nach Anspruch 1, **dadurch gekennzeichnet, daß** die Sintertemperatur der ersten Sinterstufe maximal 900° C beträgt.

4. Verfahren nach Anspruch 1, **dadurch gekennzeichnet, daß** während der letzten Sinterstufe dem Stickstoff Argon zugemischt wird.

5. Verfahren nach Anspruch 1, **dadurch gekennzeichnet, daß** die Sintertungstemperatur der letzten Sinterung zwischen 1700 und 1900° C beträgt.

6. Verfahren nach Anspruch 1, **dadurch gekennzeichnet, daß** die letzte Sinterung bei variabler Temperatur und/oder variablem Stickstoffpartialdruck durchgeführt wird, derart, daß im Zustandsdiagramm das keramische Verbundgefüge die reinen Phasen von Bestandteil A und Bestandteil B umfaßt.

7. Verfahren nach Anspruch 6, **dadurch gekennzeichnet, daß** die Sinterung in einem Bereich des Stickstoffpartialdrucks mit einer oberen Grenze $Y_1$ und einer unteren Grenze $Y_2$ erfolgt, bei dem sich die Obergrenze $Y_1$ und die untere Grenze $Y_2$ nach folgenden Funktionen ergeben:

$$Y_1 = 7{,}1566 \ln(T) - 52{,}719$$

und

$$Y_2 = 9{,}8279 \ln(T) - 73{,}988$$

wobei T die Sintertemperatur mit ≤ 1900° C ist.

**8.** Verfahren nach Anspruch 6, **dadurch gekennzeichnet, daß** in dem keramischen Verbundgefüge als Bestandteil A Trisiliziumtetranitrid und als Bestandteil B ein Metallsilizid enthalten ist.

**9.** Verfahren nach Anspruch 7 oder 8, **dadurch gekennzeichnet, daß** als Bestandteile zwischen 30 und 70 MA% Trisiliziumtetranitrid, 25-65 MA% $MoSi_2$, 1,5-8 MA% $Al_2O_3$ sowie 2-2,5 MA% $Y_2O_3$ enthalten sind.

## Claims

**1.** Process for the production of a sintered shaped article with adjustable electrical conductivity from a composite ceramic structure which contains at least two components A and B with different electrical conductivity, the shaped article being formed by a cold isostatic compression moulding step before sintering, the sintering process taking place in at least two stages the first sintering being carried out under inert gas, the last sintering being carried out under a nitrogen partial pressure of from 2 to 10 bar and the temperature of the first sintering stage being lower than the temperature of the last sintering stage.

**2.** Process according to Claim 1, **characterized in that** the first sintering stage is carried out at atmospheric pressure.

**3.** Process according to Claim 1, **characterized in that** the sintering temperature of the first sintering stage is at most 900°C.

**4.** Process according to Claim 1, **characterized in that** argon is mixed with the nitrogen during the last sintering stage.

**5.** Process according to Claim 1, **characterized in that** the sintering temperature of the last sintering is between 1700 and 1900°C.

**6.** Process according to Claim 1, **characterized in that** the last sintering is carried out at variable temperature and/or variable nitrogen partial pressure, such that the composite ceramic structure comprises the pure phases of component A and component B in the phase diagram.

**7.** Process according to Claim 6, **characterized in that** sintering takes place in an oxygen partial pressure range with an upper limit $Y_1$ and a lower limit $Y_2$, where the upper limit $Y_1$ and the lower limit $Y_2$ are given by the following functions:

$$Y_1 = 7.1566 \ln(T) - 52.719$$

and

$$Y_2 = 9.8279 \ln(T) - 73.988$$

where the sintering temperature T ≤ 1900°C.

**8.** Process according to Claim 6, **characterized in that** the composite ceramic structure contains trisilicon tetranitride as component A and a metal silicide as component B.

**9.** Process according to Claims 7 and 8, **characterized in that** between 30 and 70 MA% by mass trisilicon tetranitride, 25-65 MA% by mass $MoSi_2$, 1.5 - 8 MA% by mass $Al_2O_3$ and 2 - 2.5 MA% by mass $Y_2O_3$ are contained as components.

## Revendications

**1.** Procédé de fabrication d'une pièce moulée frittée ayant une conductivité électrique réglable, en une matière céramique composite comprenant au moins deux composants A et B à conductivité électrique différente,
selon lequel
le produit moulé est mis en forme par pression isostatique à froid avant le frittage, et
le procédé de frittage s'effectue en au moins deux étapes, le premier frittage se faisant sous gaz inerte et le dernier frittage sous une pression partielle d'azote de 2 à 10 bars, avec pour la première étape de frittage une température inférieure à la température utilisée pour la dernière étape de frittage.

**2.** Procédé selon la revendication 1,
**caractérisé en ce que**
la première étape de frittage se fait à la pression atmosphérique.

**3.** Procédé selon la revendication 1,
**caractérisé en ce que**
la température de frittage pendant la première étape de frittage est au maximum égale à 900°C.

**4.** Procédé selon la revendication 1,
**caractérisé en ce que**
pendant la dernière étape de frittage, on ajoute de l'argon à l'azote.

**5.** Procédé selon la revendication 1,
**caractérisé en ce que**
la température de frittage pour la dernière étape de frittage est comprise entre 1700 et 1900°C.

**6.** Procédé selon la revendication 1, **caractérisé en ce qu'** on effectue le dernier frittage à une température variable et/ou à une pression partielle d'azote variable de façon que dans le diagramme d'état, le mélange de céramique se compose des phases pures du composant A et du composant B.

**7.** Procédé selon la revendication 6, **caractérisé en ce que** le frittage se fait dans une plage de pressions partielles d'azote délimitée par une limite supérieure $Y_1$ et une limite inférieure $Y_2$, ces limites supérieure $Y_1$ et inférieure $Y_2$ étant données par les relations suivantes :

$$Y_1 = 7{,}1566 \ . \ \ln(T) - 52{,}719$$

$$Y_2 = 9{,}8279 \ . \ \ln(T) - 73{,}988.$$

T étant la température de frittage ≤ 1900°C.

**8.** Procédé selon la revendication 6, **caractérisé en ce que** dans la matière céramique composite, le composant A est du tétranitrure de trisilicium et le composant B un siliciure métallique.

**9.** Procédé selon l'une quelconque des revendications 7 ou 8, **caractérisé en ce que** les composants représentent entre 30 et 70 MA% de tétranitrure de trisilicium, 25-65 MA% $MoSi_2$, 1,5-8 MA% $Al_2O_3$ et 2-2,5 MA% $Y_2O_3$.

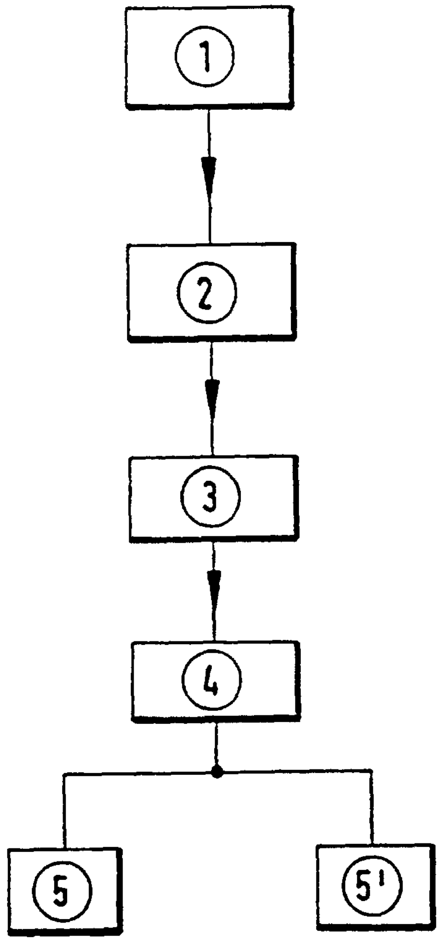
1
2
3
4
5
5'

Fig. 1

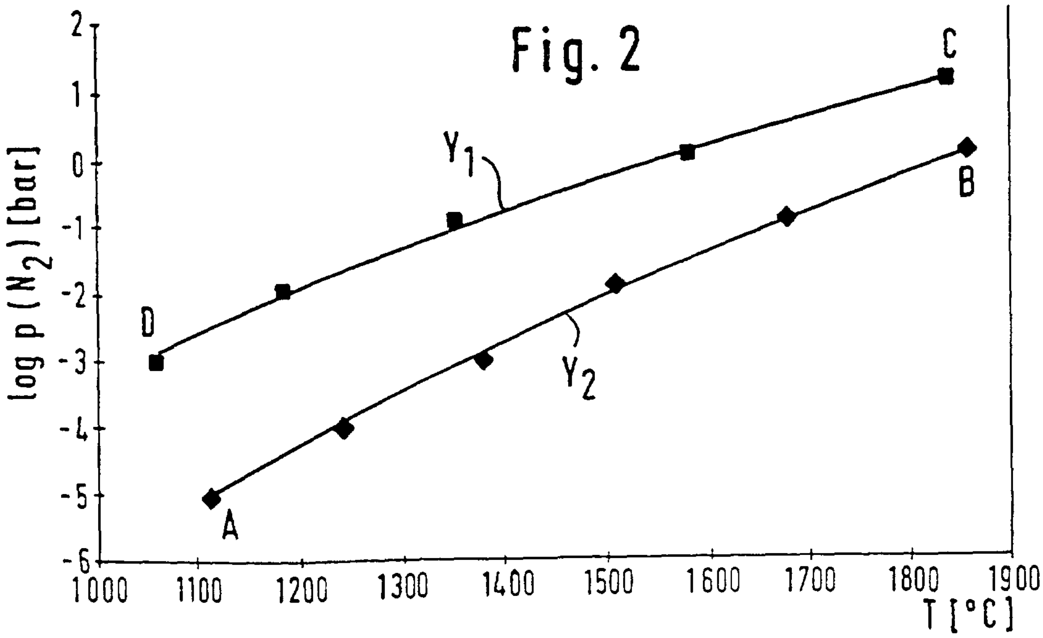
log p (N2) [bar]
T [°C]
1000
1100
1200
1300
1400
1500
1600
1700
1800
1900
2
1
0
-1
-2
-3
-4
-5
-6
Y1
Y2
A
B
C
D

Fig. 2